# EUROPEAN PATENT APPLICATION

(11) **EP 1 324 270 A2**
(43) Date of publication of application: **02.07.2003**
(21) Application number: 02027980.8
(22) Date of filing: 13.12.2002
(51) Int. Cl.: G06T 11/00

(54) **Image processing**

(30) Priority: 22.12.2001 GB 0130819
(71) Applicant: EASTMAN KODAK COMPANY, Rochester, New York 14650 (US)
(72) Inventor: Hardingham, Colin, Kodak Limited, Harrow, Middlesex HA1 4TY (GB); Robinson, Guy, Kodak Limited, Harrow, Middlesex HA1 4TY (GB); Long, Richard Frank, Kodak Limited, Harrow, Middlesex HA1 4TY (GB); Lawson, Karen Lee, Kodak Limited, Harrow, Middlesex HA1 4TY (GB)
(74) Representative: Freeman, Avi

(57) **Abstract**

The present invention provides a method of image processing, comprising the steps of scanning a processed film to obtain one or more digital images, the film being associated with a particular theme and, selecting a predefined digital image corresponding to the particular theme. The predefined digital image is composited with at least one of the one or more digital images obtained from scanning the film to produce one or more output images. The invention also provides a one time use camera, themed in association with a particular event. The one time use camera is provided with a housing with indicia relating to the particular theme (or a specific event). An identification code is also provided on the housing to enable a processor, on processing of film from the camera, to identify the theming of the one time use camera. Once the theming of the camera has been identified, it is possible to select a predefined image to composite with at least one of the images obtained from the processed film to produce an output image.

## Description

### Field of the Invention

The present invention relates to image processing and in particular to an improved method of processing of photographic images. The invention also relates to a photographic processing system and a computer program for controlling the system. The invention also relates to a one time use camera for use with the processing system of the present invention.

### Background of the Invention

It is known to provide themed one time use cameras to customers. For example, the one time use cameras may be themed to correspond to a spectator event such as a large sporting event or music concert. Examples of such events include the FIFA football world cup final or a major music concert by a well-known artist. This enables a degree of control of the images captured at such events and also enables the taking of unauthorised photographs at such events to be substantially reduced.

### Problem to be solved by the Invention

A system and method is desired that will encourage users to take photographs at such events. A system and method is also required that will enable value to be added to photographs taken by customers at major spectator events.

A system and method is also required that will enable photographs to be processed in such a way that will provide the user with choice as to whether or not to take advantage of the added value.

A control system is required to control a photographic processing system to operate in such a way as to enable value to be added to photographs taken by customers at major spectator events.

A method of supplying a photofinishing order is required that enables photographs to be produced and supplied to a customer, in which the photographs are customised in dependence on an event at which the photographs were taken.

### Summary of the Invention

According to a first aspect of the present invention, there is provided a method of image processing, comprising the steps of:
scanning a processed film to obtain one or more digital images, the film being associated with a particular theme; and,
selecting a predefined digital image corresponding to the particular theme and compositing the predefined digital image with at least one of the one or more digital images obtained from scanning the film to produce one or more output images.

In one example, the film has identification means to identify the film as being associated with the particular theme. In this case, the method further comprises the step of automatically reading the identification means and selecting the predefined image in dependence thereon.

Preferably, the film is obtained from a one time use camera, the one time use camera being associated with the particular theme.

The particular theme may be a suitable event with which a sponsor may wish to be associated. Typically, the event would be a spectator event such as a amongst others, a sporting event, a musical event or a theatrical event. Other types of event with which the film or camera may be associated include a celebration (e.g. a wedding), a ceremonial event (e.g. Remembrance Day parades), a corporate event (e.g. a company's annual dinner dance or AGM) and a political event e.g. a party political conference.

Preferably, the identification means is machine-readable.

According to a second aspect of the present invention, there is provided a method of supplying a photofinishing order, comprising the steps of:
supplying a themed film to a customer;
collecting said film after at least some of the photographs on the film have been exposed and collecting customer identification details corresponding to the film. The method then comprises providing the collected film and customer identification details to a photofinishing centre for processing where the film is processed.

The processed film is then scanned to obtain one or more digital images after which a predefined digital image corresponding to the theming of the film is selected. Finally, the predefined digital image is composited with at least one of the one or more digital images obtained from scanning the film to produce an output image.

For example, if the camera is a football world cup camera, the predefined image for compositing with the digital images obtained from scanning the film may be an image of the world cup itself. Alternatively, a banner stating the year of the world cup final e.g. "FIFA World Cup Final 2002" may be printed across the top of the photographs.

According to a third aspect of the present invention, a one time use camera is provided, themed in association with a particular event. The one time use camera is provided with a housing with indicia relating to the particular theme (or a specific event). An identification code is also provided on the housing to enable a processor, on processing of film from the camera, to identify the theming of the one time use camera. Once the theming of the camera has been identified, it is possible to select a predefined image to composite with at least one of the images obtained from the processed film to produce an output image.

Preferably, the code is machine-readable e.g. by the processor, such that the processor is able automatically to identify the theming of the one time use camera, and select a predefined image in dependence on the theming, to composite with images from the camera.

Preferably, the machine-readable identification code comprises a barcode.

In one example, the housing is also provided with space for a user to provide address information to enable processed photographs to be returned to the user from a photofinishing centre at which the film is processed.

According to a forth aspect of the present invention, there is provided a processing system for themed one time use cameras. The processing system comprises a processor to process film from the themed one time use cameras and a scanner to scan the processed film and thereby obtain one or more digital images. The processing system also includes a code reader adapted to read a machine-readable identity code on the one time use camera to identify the theming. A control unit is also provided, adapted to select a predefined digital image corresponding to the theming of the camera on identification of said theming. Finally, the processing system has a printing system controlled to composite the predefined digital image with at least one of the one or more digital images obtained from scanning the film to produce an output image.

The invention also provides a computer program that when run on a computer used to control a photographic processor, controls the processor to execute the method steps of the first aspect of the present invention. The computer program may run on a control computer, microprocessor or ASIC or any other suitable electronic device associated with or intrinsic to the processing system.

### Advantageous Effect of the Invention

The invention provides a method of image processing in which predefined digital images are composited with digital images obtained by scanning processed photographic films, to provide an association with a particular event at which the images on the film were captured. More generally, the predefined digital images may correspond to a theme unrelated to any particular event. For example the theme may be Christmas, in which case a predefined image of a Christmas tree may be composited with the digital images obtained by scanning the processed film. The Advertisers and promoters are provided with a means to allow people to create pictures of their own choice, branded with the advertiser's chosen logo, trademark, messages or combinations thereof.

The invention provides a method that allows users to experience a sense of participation in the event. For example a banner composited at the bottom of a photograph stating that the photograph was taken with an official camera of the event e.g. FIFA World Cup Final 2002 would have that effect.

The invention also provides a themed one time use camera together with a method for distributing the camera at an event. Cameras that are so distributed can be recovered and re-used once the promotion is over, thus protecting against wasteful production of cameras only for them to be discarded.

Users of the themed cameras are provided with the option of becoming involved in the promotion, receiving a real benefit of free, or reduced price, photographic resources. The promoters gain the advantage that they can specify the free channels through which the cameras can be surrendered for free processing, allowing them to increase convenience for their target audience or attract traffic to specific locations or web sites with the on-line options.

The supplier of the method of supplying a photofinishing order according to the present invention adds user value to conventional methods of supplying a photofinishing order beyond what would be gained by the simple distribution or production of themed one time use cameras. In particular, a user benefits from free or reduced price photographs whilst the advertiser has the benefit of extremely well targeted advertising.

In addition, any additional advertising supplied with the photographs returned to the customer, allow promoters to obtain addresses of people who respond to additional promotions and who indicate a willingness to receive further advertising material through alternative means e.g. post or email. This allows for ethical treatment of customer's names and addresses provided for delivery of the photographs.

In one example of the present invention, a time limitation is stipulated in relation to the period within which free or reduced price photographic processing can be received. The time limitation has the advantage that it is both convenient for the customer to encourage the customer to have the film processed as soon as possible and serves to prevent people stealing these cameras and using them over an extended period of time.

### Brief Description of the Drawings

Examples of the present invention will now be described in detail with reference to the accompanying drawings, in which:
Figure 1 shows an example of a one time use camera according to the present invention;
Figure 2 shows an example of a photograph processed according to the present invention;
Figure 3 shows a flow diagram of the main steps in the method of supplying a photofinishing order according to the present invention; and,
Figure 4 shows a schematic example of photographic processing system according to the present invention.

### Detailed Description of the Invention

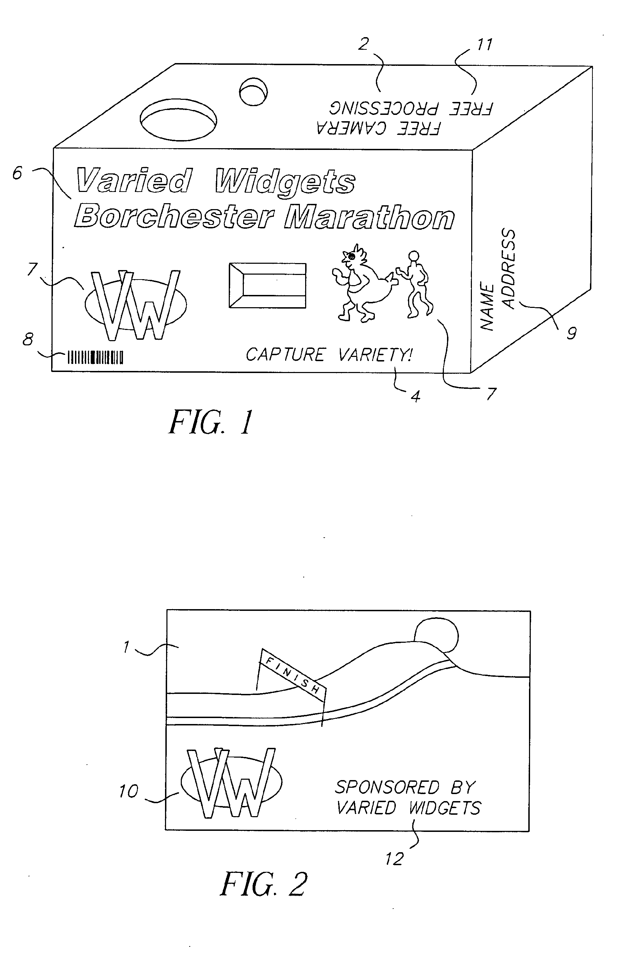

Figure 1 shows an example of a one time use camera 2 according to the present invention, for distribution at an event and/or in accordance with a promotion or theme. The camera 2 has a housing with a number of human-readable indicia 4, by which the camera is themed in association with a particular event, in this example the "Borchester Marathon". The theming of the camera need not necessarily relate to a particular event. The housing also has advertising material 6 for a sponsor and the sponsor's logo 7. In addition, the camera 2 has a machine-readable identification code 8.

The machine-readable code 8 is designed to be read by a photographic processor. As will be explained below, the code 8 enables a processor, on processing of film from the camera 2, to identify, automatically, the event or theme with which the camera is associated. Various other indicia may also be included on the housing of the camera. For example, an indication 11 that both the camera and film processing are free may be included.

It is possible that the code 8 is provided in a human-readable as well as, or instead of machine-readable form. If the code 8 is in human-readable form only, operator intervention is required during processing and photofinishing, as will be explained below.

The machine-readable code 8, which in this case is a bar code, represents an identity number, which encodes one or more of:
· The theme;
· The event or promotion the camera has been distributed for;
· Whether developing is free at participating film developers, reception points or photofinishing centres;
· The date by which the promotion expires; and,
· A checksum that validates the rest of the information.
This machine-readable code 8 allows participating photofinishing centres, film developers or reception points to determine whether or not the cameras are part of a valid promotion. If some or all of this information is provided on the camera in a human-readable form, this enables an operator to check it without a corresponding reader.

Also marked on the camera 2 are instructions (not shown) to be followed by a customer relating to steps that the customer must take to obtain the maximum benefit from the camera i.e. to take advantage of the promotion. In one example, a form 9 is provided on the camera housing for a user to write down their name and address. Information may also be provided about any special parts of the promotion such as details of specific outlets to which the camera must be returned if a customer is to benefit from, say, free processing. The form 9 enables the camera 2 to be collected at the event at which it was distributed without the need for a delivery envelope. This simplifies the collection procedure.

As will be explained below, when the one time use camera is received via collection at the event, or via an alternative return method, the machine-readable code 8 is read at a digital development facility. At this facility any customer-supplied information written on the camera 2 is recorded at an associated Auto Sorter Data Terminal as if this information was written on a film-processing envelope. It is possible that this information is supplied on a film-processing envelope.

For any film from a camera that is part of a valid promotion and therefore has a corresponding valid machine-readable code 8, an additional digital image is composited on the images, obtained from processing of the film to produce output images. Figure 2 shows an example of such a photograph. The additional images printed are in this case a discrete logo or trademark 10 of the sponsor of the event, or other pre-agreed content 12 such as an indication of who has sponsored the event. In each case, the compositing of the scanned image and the predefined image such as the logo or indication of who or what organisation has sponsored the event is executed automatically.

The output image is the composite of the additional predefined digital image with the digital image obtained by scanning the processed film. Once the output image has been created a format e.g. a hard copy, a digital file or any other suitable format may be selected for production as will be explained below.

In addition, once the customer order is prepared for return to the customer, additional marketing or promotional information may be supplied. If photographs are supplied as part of the customer order, the additional marketing or promotional information may be supplied in the picture container.

For a sponsored event, or other promotion, themed one-time-use cameras are produced by printing advertising or branding appropriate to the event on the camera housing. As explained above, photographs from these cameras are printed with additional advertising or promotional indicia. The advertising or branding appearing on the camera housing could include the same or slightly modified advertising or branding appearing in the photographs obtained by processing of the film from the camera.

The cameras are sold, or distributed for free, at the event by the organisers or their agents as they see fit to attendees of the event. The cost in kind is potentially recouped by virtue of the advertising and marketing achieved by compositing a logo on photographs or the inclusion of marketing material with the photographs returned to the customer.

Alternatively the camera can be sold or distributed for free along with tickets for the event that have been sent via the post (or some other method of physical distribution). Another option is to give away or sell the camera when people show the ticket for an event. These two alternative methods allow distribution of the cameras to be rationed in a controlled way by existing, staffed processes.

It will be appreciated that although the above description relates to one time use cameras it is also possible that a film in isolation for use with a user's camera is provided to a user at the event. In this case, the packaging on the box of the film may be themed in the same or similar manner to which the one time use camera is themed. The machine readable code 8 in this case is provided on the film itself. This may be done using magnetics or alternatively using a latent image barcode on the film. Alternatively, the code may be provided on a customer envelope used to collect exposed films.

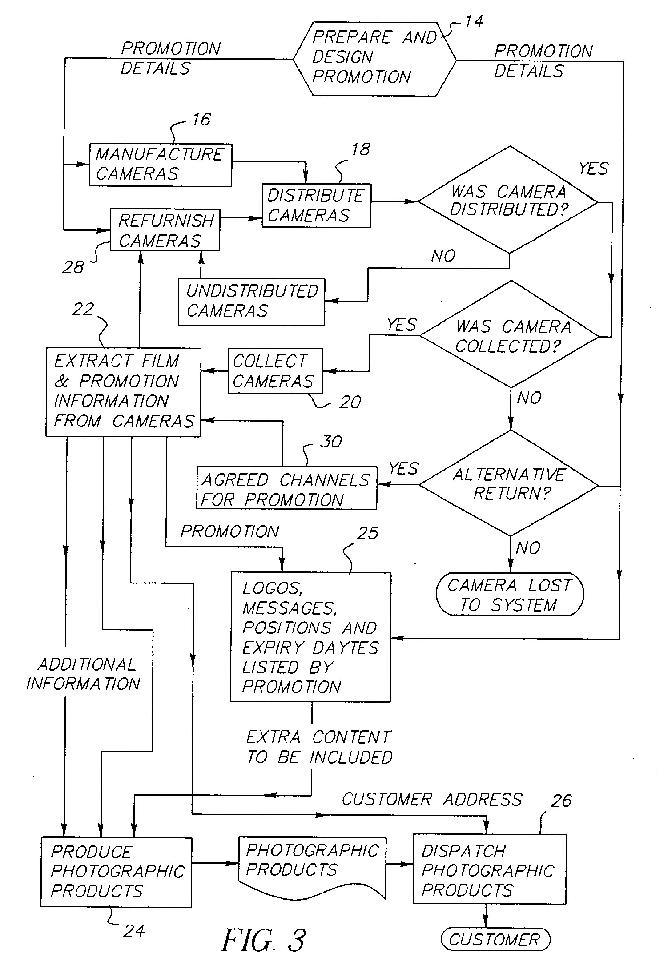

Figure 3 shows a flow diagram of the main steps in the method of supplying a photofinishing order according to the present invention. Initially, at step 14, the promotion for which themed one time use cameras are to be supplied is prepared. The design to be applied to the housing of the camera is created and any additional predefined images to be composited on photographs from the camera are designed or selected. In this example, at step 16 the cameras are manufactured prior to distribution at step 18 by a suitable means at the event for which they have been designed. Each distributed camera is then used by a user at the event after which it is collected at step 20 for processing of the film.

At step 22, a photofinishing centre receives the cameras for processing the film from the cameras. Information such as the customer identification details written on the camera housing is extracted. The machine-readable code 8 (in Fig 1) is read by the processor to enable processing of the film to be performed as described above. The information extracted includes the customer address for return of the photographs and additional information such as the event at which the camera was used. At step 24, the photographic products are produced prior to dispatch to the customer (step 26). Any desired ancillary products might also be produced. Possible examples include a CD or a customised mouse mat.

It can be seen that following on from step 18, if any cameras have not been distributed at the event for which they were designed, they are returned to the manufacturer at step 28 for refurnishing with alternative packaging to be used at a future different event. In addition, after the information such as the customer details written on the camera housing is extracted at step 22, the cameras are preferably returned to the manufacturer for re-packaging and eventual re-use at a different event.

If the cameras are not collected directly from the customer at the event at step 20, it is possible that they are returned to a participating photofinishing centre by an alternative route. Typically this is done via pre-agreed channels for the promotion, as shown in step 30.

When the promotion is prepared for which themed one time use cameras are to be supplied, at step 14, the design to be applied to the housing of the camera is created. In addition a database 25 of the predefined images to be used with the promotion is created. The database 25 includes the predefined digital images for compositing with the scanned images from the processed film, such as the logos of any sponsors, the messages to be printed on the photographs and also information relating to the position on the photograph at which the predefined image is to be printed. In addition the expiry date of the promotion is stored for communication to respective photofinishing centres. Essentially, the database 25 includes all the information required by the photofinishing centre to prepare the product for return to the customer, in accordance with the promotion.

As mentioned above, if the cameras are not collected for free processing at the event there will be an alternative return method so the customer can get their camera processed for free, subject to one or more conditions. Examples of suitable conditions include the requirement that the camera is returned within a predetermined time limit. Such conditions might encourage people to visit specific shops or locations therefore increasing the marketing potential.

In one example, a required condition is that the camera is returned to a member shop of a participating photographic chain. The contents of the camera could be developed elsewhere but the customer will have to pay and any compositing material will not appear. This allows for users of the cameras to opt out of such features by paying for the processing and receiving unaltered prints.

The limit to free developing time ensures that the films are used in a timely fashion and to ensure that promotion information only needs to be loaded at participating photo-finishers for a finite period of time, allowing for time for the film to pass through the pre-agreed free channels.

The advertiser or promoter pays for each camera produced with their branding. They may also pay for all films processed, for any logistic support and for any associated consultancy work. The number of participating customers is provided to the advertiser or promoter so the success of the promotion can be judged. Name and address details of customers are not released to the advertiser or promoter although the additional advertising material might include a promotion or an offer to encourage customers to supply this information directly to the advertiser or promoter.

A negotiated refund for undistributed cameras is a possibility as the one time use cameras can be re-furnished for other promotions and events. As part of the promotion trained people can be hired to distribute and collect cameras. Other logistical help could be offered, including the collection of cameras from locations where customers have surrendered cameras.

Optionally, processed photographs can also be made available on-line as digital image files and used to produce branded merchandising as appropriate to the event. The digital image files could be viewed through the promoter's web site, therefore increasing traffic and business for that site. Profits for such on-line promotions would be subject to a pre-agreed division.

The advertisers or promoters can choose from a range of fulfilment products to be offered as part of the promotion by selecting the range of merchandising to be made available or by arranging for extra items to be added, possibly for their exclusive use. Examples of possible fulfilment products which could be included in a promotion are photographic prints, mouse mats, mugs, t-shirts, jigsaws, flags or any other suitable image-supporting article.

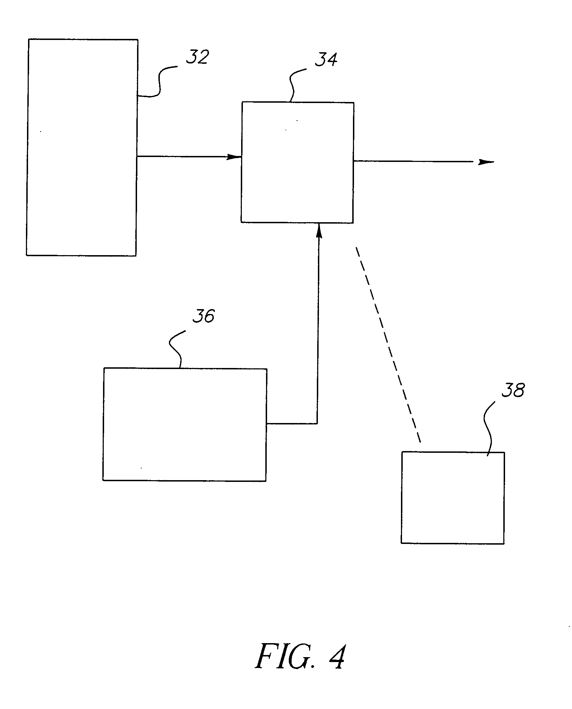

Figure 4 shows a schematic example of photographic processing system according to the present invention. The processing system has a processor 32 to receive and process film from one time use cameras according to the present invention. Typically, the processor receives the exposed film from the one time use camera and executes the conventional steps of chemical photographic processing to produce developed film.

The developed film is then transferred to a digital printing system 34 for preparation of the output photographs. A reader 36 is provided to read the machine-readable code 8 provided on the housing of the one time use camera. The reader 36 may be integrated with the processing system or may be a separate additional unit.

In use, once the code has been read by the reader 36 a control signal is sent to the printing system 34 informing the printing system of the details of the theming of the camera or of the event at which the one time use camera was used. The printing system then retrieves one or more predefined digital images from an associated memory (not shown) and composites the predefined image with scanned images from the processed film. If the code 8 on the housing of the one time use camera is not machine readable i.e. is only provided in human-readable form, an operator is required to read the code and manually provide a signal to the printing system, via a suitable user interface. The user interface may comprise a PC connected to the processing system or a display and keyboard integrated with the processing system. Finally, in this example, the printing system 34 prints output images each of which is a composition of one or more predefined digital images together with a scanned image from the processed film

A control computer 38 is provided to control the operation of the processing system. The control computer may be integrated with the processing system. Alternatively, it may be a stand-alone unit connected to the processing system. It is also possible that both an integrated processor and a stand-alone unit are provided arranged in combination to provide the necessary control for the processing system. The control computer 38 may be any suitable electronic processing device. This includes a dedicated ASIC, a microprocessor or a computer or PC programmed to control the processing system to operate in accordance with the methods of the present invention.

## Claims

1. A method of image processing, comprising the steps of:
scanning a processed film to obtain one or more digital images, the film being associated with a particular theme;
selecting a predefined digital image corresponding to said particular theme; and, compositing the predefined digital image with at least one of the one or more digital images obtained from scanning the film to produce one or more output images.

2. A method according to claim 1, further comprising the step of digitally printing the output image.

3. A method according to claim 1, in which the film has identification means to identify the film as being associated with the particular theme.

4. A method according to claim 3, comprising the step of automatically reading said identification means and selecting the predefined image in dependence thereon.

5. A method according to claim 1, in which the film is obtained from a one time use camera, the one time use camera being associated with the particular theme.

6. A method according to claim 1 in which the particular theme corresponds to an event selected from the group consisting of a sporting event, a musical event, a theatrical event, a celebration, a ceremonial event, a corporate event and a political event.

7. A method according to claim 3, in which the identification means is machine-readable.

8. A method of supplying a photofinishing order, comprising the steps of:
supplying a themed film to a customer;
collecting said film after at least some of the photographs on the film have been exposed;
collecting customer identification details corresponding to the film;
providing said collected film and customer identification details to a photofinishing centre for processing;
processing the film;
scanning the processed film to obtain one or more digital images; and,
selecting a predefined digital image corresponding to the theming of the film and compositing the predefined digital image with at least one of the one or more digital images obtained from scanning the film to produce an output image.

9. A method according to claim 8, in which the customer identification details are a name and address of the customer.

10. A method according to claim 8, in which the film is provided in a one time use camera.

11. A one time use camera themed in association with a particular event, the one time use camera comprising:
a housing with indicia relating to the particular event; and,
an identification code to enable a processor, on processing of film from the camera, to identify the theming of the one time use camera and select a predefined image to composite with at least one of the images obtained from the processed film to produce an output image.

12. A one time use camera according to claim 11, in which the identification code is machine-readable to enable a processor on processing to identify automatically the theming of the one time use camera

13. A one time use camera according to claim 12, in which the machine-readable identification code comprises a barcode.

14. A one time use camera according to claim 11, in which the housing is also provided with space for a user to provide address information to enable processed photographs to be returned to the user from a photofinishing centre at which the film is processed.

15. A processing system for themed one time use cameras, the processing system comprising:
a processor to process film from a themed one time use camera;
a scanner to scan the processed film and thereby obtain one or more digital images;
a code reader adapted to read a machine-readable identity code on the one time use camera to identify the theming;
a control unit adapted to select a predefined digital image corresponding to the theming of the camera on identification of said theming; and,
a printing system controlled to composite the predefined digital image with at least one of the one or more digital images obtained from scanning the film to produce an output image.

16. A computer program that when run on a computer used to control a photographic processor controls the processor to execute the method steps of claim 1.

17. A computer program stored on a computer readable medium, such that when the computer program runs on a computer used to control a photographic processor, the processor is controlled to execute the method steps of claim 1.
